# FASCICULE DE BREVET EUROPEEN

(11) **EP 2 342 971 B1**
(45) Date de publication et mention de la délivrance du brevet: **18.07.2012**
(21) Numéro de dépôt: 10306411.9
(22) Date de dépôt: 15.12.2010
(51) Int. Cl.: A21C 3/02, A21C 3/04

(54) **Dispositif de préformage de pâte boulangère en une bande de pâte pour sa division en pâtons**
Vorrichtung zum Vorformen von Bäckerteig zu einem Teigstrang zur Aufteilung in Teiglinge
Apparatus for preforming bakery dough into a dough strand for division into dough pieces

(30) Priorité: 12.01.2010 FR 1050166
(43) Date de publication de la demande: 13.07.2011
(73) Titulaire: MECATHERM, Société Anonyme, 67130 Barembach (FR)
(72) Inventeur: Zorn, Bernard, 67700, Saverne (FR)
(74) Mandataire: Rhein, Alain

(56) Documents cités:
- EP-A2- 0 920 805
- EP-A2- 1 400 173
- WO-A1-2009/091247
- WO-A2-02/080683
- DE-A1- 1 906 825

## Description

L'invention concerne un dispositif de préformage en une bande d'une pâte boulangère ou similaire en vue de sa division en pâtons.

La présente invention trouvera son application dans le domaine des dispositifs et installations pour la préparation et de la manutention de pâte de boulangerie, viennoiserie, pâtisserie ou analogue.

L'invention concerne plus particulièrement un dispositif de préformage en une bande d'une telle pâte boulangère ou analogue en vue de sa division en pâtons.

De manière usuelle, la pâte boulangère ou similaire est préparée dans un pétrin qui vient alimenter une unité de traitement de cette pâte disposant, souvent en amont, d'un dispositif permettant de subdiviser cette pâte en pâtons. Généralement, en sortie du pétrin, cette pâte est déversée dans une trémie d'où elle s'écoule, soit directement dans un dispositif de division dont il existe différentes formes de réalisation, soit dans un laminoir en vue de préformer la pâte en une bande de pâte que l'on vient ensuite découper en pâtons par l'intermédiaire de moyens de découpes longitudinaux et transversaux.

Plus particulièrement, ce procédé de laminage pour former une bande de pâte consiste à laisser s'écouler la pâte en sortie de trémie, entre une succession de paires de rouleaux jusqu'à obtenir une abaisse de pâte à l'épaisseur souhaitée. La bande ainsi formée alimente, ensuite, un dispositif de découpe adapté.

Le problème résultant d'un tel procédé de formation d'une bande de pâte par laminage ou extrusion consiste en ce que la largeur de cette bande de pâte susceptible d'être ainsi obtenue est nécessairement limitée, sans compter qu'elle n'est pas régulière.

En somme, cette bande de pâte doit subir des découpes latérales de largeurs non négligeables pour palier à ce manque de régularité et obtenir, ainsi, une bande de largeur constante en vue de l'obtention, au final, de pâtons eux-mêmes parfaitement réguliers. Ces découpes latérales sont encore appelées rognures.

Celles-ci sont, soit réincorporées dans la pâte suivante en cours de pétrissage, à condition que ces rognures ne représentent qu'une très faible proportion de cette pâte en cours d'élaboration, soit stockées en chambre froide et réincorporées, après dosage, dans d'autres pâtes destinées à d'autres produits.

En tout état de cause, des quantités importantes de ces rognures constituent un vrai problème, car réincorporées trop massivement, ces rognures modifient les propriétés de pâte. On rappellera, en effet, que la pâte est un matériau possédant une élasticité et une mémoire de forme, propriétés qui se traduisent par une accumulation des tensions sous l'effet des contraintes qui lui sont imprimées, ces tensions ayant une conséquence directe sur la qualité des produits finaux obtenus.

De même, tenant compte que sous l'effet de l'écoulement gravitaire de la pâte depuis la trémie entre les rouleaux des laminoirs, la largeur de la bande de pâte obtenue est nécessairement limitée, de l'ordre de 250 à 300 mm, ces découpes latérales sont loin d'être négligeables, en proportion, par rapport à la bande de pâte produite.

En somme, il apparaît comme un avantage majeur que de pouvoir réduire au strict minimum ces rognures.

Il existe encore une autre solution pour préformer la pâte en une bande de pâte destinée à être subdivisée en pâtons, consistant à laisser s'écouler des paquets de pâte depuis la trémie sur un tapis de transport ceci en faisant en sorte que ces paquets de pâte se chevauchent selon une disposition en écaille pour former, en quelque sorte, une pré bande de pâte laquelle est ensuite étirée en passant, là encore, au travers de rouleaux de laminoirs adaptés.

On comprend qu'un tel procédé de préformage de la pâte en bande de pâte ne répond pas davantage au problème de régularité, notamment en largeur, de la bande de pâte finalement obtenue, ceci en comparaison avec la solution précédemment évoquée. Elle ne permet pas, non plus, d'obtenir une largeur de bande plus importante.

Ainsi, si ces dispositifs existants conduisent à une perte de pâte non négligeable, ils sont à l'origine d'une cadence limitée de production de pâtons.

On connait également par le document WO 2009/091247 un dispositif de préformage en une bande de pâte boulangère en vue de sa division en pâtons comportant une trémie de stockage de pâte s'étendant au-dessus d'un tapis de transport sensiblement horizontal. Du côté situé dans la direction de déplacement de ce tapis, la trémie comporte une ouverture latérale au travers de laquelle la pâte s'extrait du dessous de cette trémie, entrainée par ledit tapis, pour être prise en charge par un dispositif de formage, proprement dit, se présentant sous forme d'un tunnel de passage. Les parois de ce tunnel sont constituée par quatre convoyeurs à bande, un premier formant le prolongement dudit tapis de transport horizontal, un deuxième s'étend parallèlement à une distance prédéfinie au-dessus du premier et deux autres, disposés verticalement et délimitant les parois latérales de ce tunnel. Ainsi, celui-ci est de section rectangulaire sensiblement sur toute sa longueur.

Même si en théorie, la pâte doit occuper toute la largeur du fond de la trémie et s'extraire de cette dernière sous forme d'une bande de largeur sensiblement constante, on a pu constater qu'il n'en était rien. Précisément, en raison des difficultés pour la pâte à s'écouler le long des parois de la trémie et des charges de pâte variables dans cette dernière, il se peut que des espaces vides, sans pâte se forme en fond de trémie, en particulier sur les côtés latéraux, et le dispositif de formage, placé en aval, ne peut à lui seul remédier à ce problème, d'autant que la largeur du tunnel au travers duquel la pâte est forcée, est égale à la largeur de la trémie elle-même. Il s'en suit, évidemment, une bande de pâte de largeur non constante en sortie de tunnel, imposant une nouvelle fois des découpes latérales et les rognures avec les inconvénients générés par leur recyclage dans le circuit de préformage de la pâte.

Une autre solution similaire connue est décrite dans le document WO 02/080683 concernant un dispositif comportant sous l'ouverture de la trémie de stockage de la pâte, un passage pour l'écoulement de ladite pâte depuis la trémie jusqu'à un convoyeur. De plus, ledit passage comprend un tapis de transport similaire, s'étendant horizontalement et entraîné en déplacement alternatif de translation au dessus et dans la direction d'entraînement dudit convoyeur.

C'est donc dans le cadre d'une démarche inventive que l'on a pensé optimiser ce type d'installation en réduisant au minimum les pertes de pâtes dues aux rognures et en cherchant à obtenir une bande de pâte parfaitement régulière dès la sortie du dispositif de préformage, ceci au travers d'une installation de construction économique.

Ainsi, l'invention concerne un dispositif de préformage en une bande de pâte boulangère en vue de sa division en pâtons, comportant, sous l'ouverture d'une trémie de stockage de pâte, un couloir pour conformer cette pâte en bande de pâte, comprenant :
- un tapis de transport sensiblement horizontal et soumis à des moyens d'entraînement adaptés ;

De plus, un tel dispositif comporte encore un rouleau de lissage de pâte s'étendant transversalement et à une distance déterminée au-dessus du tapis de transport et soumis à déplacement alternatif en amont et en aval sensiblement parallèlement et dans la direction de déplacement de ce tapis de transport.

Ledit dispositif se caractérise par le fait qu'il comporte un bec de repoussage juxtaposé immédiatement en amont du rouleau, de part et d'autre de ce tapis et parallèlement à la direction de déplacement de ce dernier, des parois latérales de guidage de la pâte et qu'il comporte de lissage et solidarisé en déplacement de ce dernier de manière à s'étendre au moins partiellement sous la trémie et obturer au moins en partie l'ouverture sous cette dernière lorsque ledit rouleau de lissage est repoussé en amont.

Les avantages découlant de la présente invention consistent en ce que, dès la sortie de la pâte de la trémie dans laquelle elle est stockée, cette pâte est introduite dans un couloir au périmètre parfaitement délimité, sachant que l'on va contraindre cette pâte à s'écouler sur toute la largeur de ce couloir au travers du déplacement alternatif du rouleau de lissage.

Cette action du rouleau de lissage pour garantir le remplissage dudit couloir sur toute sa largeur est optimisée grâce à ce bec de repoussage

qui, en repoussant la pâte sous la trémie, l'oblige à venir remplir les endroits au niveau desquels elle ne s'est pas écoulée naturellement sous l'effet de son propre poids en sortie de trémie.

On observera que le rouleau de lissage a pour avantage de ne pas contraindre excessivement la pâte comme peut le faire.un tunnel, en rappelant qu'il s'agit d'une matière à effet mémoire et que toute manipulation a une influence sur les caractéristiques du produit final.

Selon une particularité de la présente invention, les parois latérales de guidage sont elles-mêmes définies par des bandes de convoyage verticales de manière à empêcher l'adhérence de la pâte le long de ces parois et réduire, ainsi, les effets de parois d'où résulte, habituellement, un manque de régularité de la largeur de la bande de pâte à l'issue du dispositif de préformage.

Selon encore une autre particularité de la présente invention, autour du rouleau de lissage s'enroule partiellement une bande.

Plus particulièrement, cette bande est soumise à des moyens d'entraînement auxquels sont associés des moyens de débrayage conçus aptes à assurer, d'une part, l'entraînement de cette bande à une vitesse d'avance synchronisée avec celle du tapis de transport lors du déplacement du rouleau de lissage dans le sens de déplacement dudit tapis et, d'autre part, leur débrayage lors du déplacement de ce rouleau de lissage en sens inverse. En somme, indépendamment du déplacement du chariot, sa bande est définie pour progresser à une vitesse sensiblement identique à celle du tapis de transport sur lequel vient reposer la pâte.

Les avantages découlant de la présente invention consistent en ce que le dispositif de préformage est capable de délivrer une bande de pâte qui, non seulement, est de largeur accrue, mais, en plus, est régulière dans ses dimensions de manière à limiter les déchets de pâtes au travers des découpes ou rognures latérales.

D'autres buts et avantages de la présente invention apparaîtront au cours de la description qui va suivre, se rapportant à un exemple de réalisation donné à titre indicatif et non limitatif.

La compréhension de cette description sera facilitée en se référant aux dessins ci-joints dans lesquels :
- la figure 1 est une représentation schématisée et en coupe longitudinale d'un dispositif de préformage selon l'invention ;
- la figure 2 est une représentation schématisée et en coupe transversale selon II-II de la figure 1 ;
- la figure 3 est une représentation schématisée et vue en coupe longitudinale d'un mode de réalisation préférentiel du dispositif de préformage selon l'invention;

Tel que représenté dans les figures des dessins ci-joints, la présente invention concerne un dispositif de préformage 1 de pâte boulangère ou autre en vue de former une bande de pâte pour sa division en pâtons.

De manière usuelle, la pâte, après pétrissage, est déversée dans une trémie 2 comportant, en partie inférieure, une ouverture 3 au travers de laquelle cette trémie 2 alimente, elle-même, ledit dispositif de préformage 1 selon l'invention.

A ce propos, celui-ci comporte un tapis de transport 4 constitué, essentiellement, d'une bande de transport 5 décrivant un circuit bouclé en venant s'enrouler partiellement au moins autour d'un rouleau de renvoi amont 6 et d'un rouleau de renvoi aval 7.

C'est donc sur le brin supérieur 8, sensiblement horizontal de cette bande 5 correspondant au tapis de transport 4, que la trémie 2 délivre la pâte 9 au travers de son ouverture 3.

Préférentiellement, cette ouverture 3 de la trémie 2 s'étend sensiblement sur toute la largeur du tapis de transport 4. Ainsi, cette ouverture 3 se présente sous forme d'une fente délimitée, essentiellement, par une paroi amont 10, une paroi avale 11 et des parois de jonction latérales.

Quant aux dispositifs de préformage 1, ils comportent encore, au-dessus du tapis de transport 4, sensiblement à hauteur des bords latéraux 12, 13 de ce dernier, des parois latérales de guidage 14, 15 avantageusement définies par des bandes de convoyage verticales 16 décrivant, là encore, un circuit bouclé en venant s'enrouler autour de rouleaux de renvoi verticaux 17, 18 adaptés.

En conséquence, ces parois latérales de guidage 14, 15 ou bandes de convoyage verticales 16 s'étendent parallèlement à la direction de déplacement du tapis de transport 4. En outre, elles délimitent avec ce dernier un couloir 20 pour conformer la pâte en une bande de pâte régulière 21.

Selon l'invention, le dispositif de préformage 1 comporte également un rouleau de lissage 19 s'étendant transversalement entre lesdites parois de guidage latérales 14, 15 et à une distance « d » déterminée au-dessus du tapis de transport 4. Ce rouleau de lissage 19 est mobile en translation au-dessus de ce tapis de transport 4, sensiblement parallèlement à la direction « D » de déplacement de ce dernier.

De manière avantageuse, l'épaisseur « e » de cette bande de pâte 21 en sortie du couloir 20 peut être ajustée grâce à des moyens de réglage notamment de cette distance « d » entre le rouleau de lissage 19 et le tapis de transport 4. Selon un mode de réalisation préférentiel, ces moyens de réglage interviennent sur le positionnement en hauteur dudit rouleau de lissage 19 et de la trémie 2, par rapport audit tapis de transport 4.

Selon une autre particularité de l'invention, le rouleau de lissage 19 est mobile en translation dans la direction « D » de déplacement du tapis de transport 4, sensiblement parallèlement à ce dernier, et est soumis, sous l'impulsion de moyens d'entraînement 22 à un mouvement alternatif de va et vient, en amont et en aval, suivant cette direction « D ». Ainsi, ce rouleau de lissage 19 peut être solidaire d'un chariot 24, sur lequel agissent lesdits moyens d'entraînement 22.

Selon un premier mode de réalisation le rouleau de lissage est monté libre en rotation sur ce chariot 24.

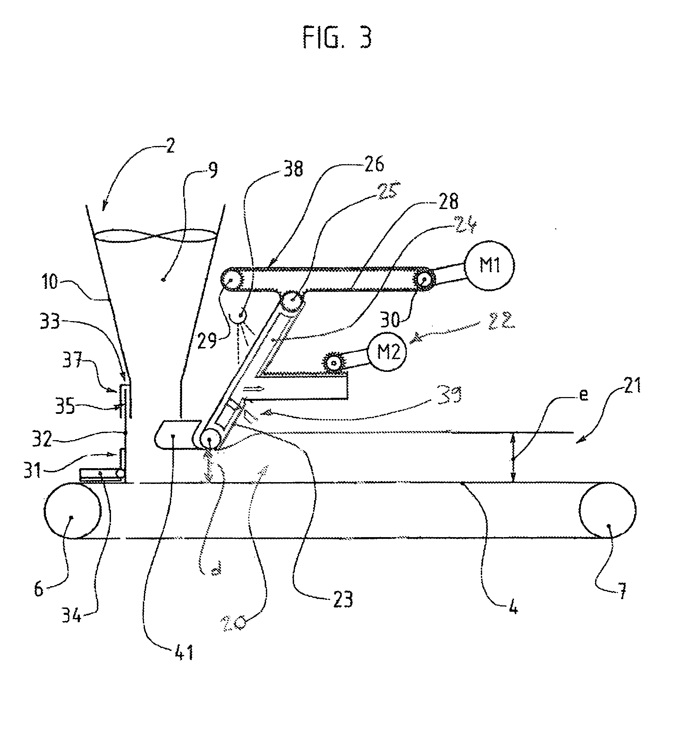

Selon un autre mode de réalisation visible dans la figure 3 l'invention, autour du rouleau de lissage 19 s'enroule partiellement un tapis 23 décrivant un circuit bouclé en venant s'étendre au moins entre ce rouleau de lissage 19 et un autre rouleau de renvoi 25 placé plus haut que comporte le chariot 24.

Ce tapis 23 est soumis à des moyens 26 pour assurer, avantageusement, son entrainement à une vitesse de déplacement sensiblement synchronisée, ou synchronisée, avec celle du tapis de transport 4, ceci indépendamment du déplacement du rouleau de lissage 19. En d'autres termes, que le rouleau de lissage 19 se déplace en amont ou en aval, ou encore se trouve dans une phase transitoire de décélération ou d'accélération, voire à l'arrêt, les moyens d'entrainement 26 sont ainsi conçus pour entrainer en permanence le tapis 23 à cette vitesse d'avance synchronisée à celle du tapis 4.

Selon un mode de réalisation préférentiel, plus particulièrement illustré de manière schématisée dans la figure 3, ces moyens d'entrainement 26 peuvent être définis par le rouleau de renvoi 25, autour duquel vient s'enrouler partiellement le tapis 23, sachant qu'autour de ce même rouleau 25 vient, en outre, s'enrouler partiellement une courroie d'entrainement 28 à avance motorisée. Ainsi, cette courroie 28 décrit un circuit bouclé en venant elle-même s'enrouler autour de deux autres rouleaux de renvoi fixes 29, 30, indépendants du chariot 24 et dont l'un 30 au moins est moteur.

Ainsi, au travers de cette courroie 28 et de sa coopération avec le rouleau de renvoi 25, il est imprimé au tapis 23 une vitesse d'avance sensiblement égale, égale ou approchante par rapport à celle du tapis de transport 4.

En cas de déplacement du chariot 24 en amont, ce rouleau de renvoi 25 vient se déplacer le long de la courroie d'entrainement 28, tout en restant systématiquement en prise avec cette dernière. L'accélération relative de la vitesse de déplacement du tapis 23 générée par ce déplacement est totalement compensée par le déplacement dudit chariot 24 relativement au tapis de transport 4. Il en va de même lors du déplacement an aval de ce chariot 24 générant un ralentissement du tapis 23 compensé par l'avance de ce chariot 24.

Un bec de repoussage 41 est juxtaposé immédiatement en amont du rouleau de lissage 19 et solidarisé en déplacement de ce dernier, de manière à s'étendre au moins partiellement sous la trémie 2 et à obturer au moins en partie l'ouverture 3 sous cette dernière, lorsque ledit rouleau de lissage 19 est repoussé en amont.

Avantageusement, ce bec de repoussage 41 est solidaire du chariot 24, dont dépend le rouleau de lissage 19.

Il convient de noter qu'en venant s'étendre au moins partiellement sous cette ouverture 3 de la trémie 2 lors de son déplacement en amont, ce bec 41 a pour conséquence de contraindre la pâte 9, s'écoulant depuis la trémie 2, à se répartir transversalement sous l'ouverture 3 de cette dernière pour garantir un remplissage du couloir 20 sur toute sa largeur.

Cette action est encore améliorée sous l'effet de l'entraînement de la pâte par le tapis 23 s'enroulant autour du rouleau de lissage 19. En effet, le tapis 23 a tendance à prélever la pâte 9 de la trémie 2 pour la contraindre au travers de son ouverture 3.

Il en résulte un parfait remplissage du couloir 20 du dispositif de préformage 1 capable de délivrer une bande de pâte 21 parfaitement régulière.

Selon encore une autre particularité de la présente invention, dans le prolongement sous la paroi amont 10 de la trémie 2, délimitant, en partie amont, l'ouverture 3 de cette dernière, le dispositif de préformage 1 comporte encore un poussoir 31 à mouvement oscillant dans la direction « D ». Ce poussoir 31 se présente préférentiellement sous forme d'un volet 32.

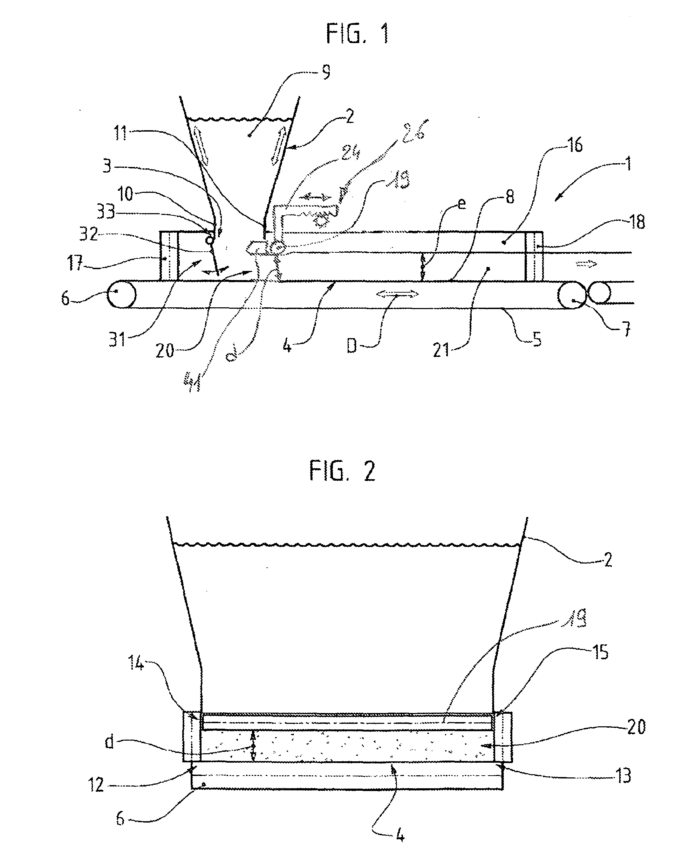

Deux formes de réalisations sont visibles dans les dessins, une première dans la figure 1 et une seconde en figure 3.

Selon le premier mode de réalisation, le volet 32 définissant ce poussoir 31 est monté, articulé, en bordure inférieure 33 de la paroi amont 10 de la trémie 2. L'articulation s'étend transversalement et parallèlement au-dessus du tapis de transport 4. Ainsi, ce volet 32 est préférentiellement soumis à un mouvement oscillant, grâce à des moyens moteurs (non représentés sur les dessins).

A noter que ce mouvement oscillant du volet 32 peut être synchronisé avec le déplacement alternatif du chariot 24, tout comme ces déplacements peuvent être décalés l'un par rapport à l'autre.

Selon un mode de réalisation préférentiel, la longueur, autrement dit la hauteur, du volet 32 est ajustable, en fonction de sa position, par rapport à la distance séparant l'ouverture 3 de la trémie 2 par rapport au tapis de transport 4. Ainsi, quelle que soit la position angulaire de ce volet 32 ou encore la distance séparant la trémie 2 du tapis de transport 4, ce volet 32 peut rester sensiblement au contact ou au contact avec ce tapis de transport 4, de manière à éviter, sous l'effet de la poussée imprimée audit volet 32, que la pâte flue sous ce dernier. Il pourrait en résulter un effet de pincement lors d'un mouvement inverse de ce volet 32, allant jusqu'au coincement du mécanisme.

Ainsi, selon un mode d'exécution avantageux, ce volet 32 peut être de nature télescopique.

Dans le second mode de réalisation visible en figure 3, le volet 32 est monté sur un coulisseau 34, lui-même monté libre en translation au-dessus du tapis de transport 4, ceci dans la direction « D ». Grâce à des moyens moteurs adaptés, agissant sur le coulisseau 34, le volet 32 est soumis au mouvement oscillant. Par ailleurs, ce volet 32 est rendu solidaire, au travers de son bord supérieur 35, de la paroi amont 10 de la trémie 2.

Plus précisément, cette solidarisation est assurée tout en autorisant au volet 32 une mobilité relative, verticalement et en rotation, par rapport à la bordure inférieure 33 de ladite paroi amont 10.

Tel que visible sur la figure 3, au niveau de son bord supérieur 35, ce volet 32 est maintenu en applique contre la face externe 36 de la paroi amont 10 par l'intermédiaire d'un étrier de retenu 37 adapté. Ainsi, non seulement la distance entre le tapis de transport 4 et l'ouverture 3 de la trémie 2 peut être réglée à volonté, mais le volet 32, grâce à sa mobilité verticale relative par rapport à ladite trémie 2, vient s'ajuster, automatiquement à cette distance séparant l'un et l'autre, quelque soit sa position angulaire.

En outre, étant articulé sur le coulisseau 34, lui-même monté coulissant à distance réduite au-dessus du tapis de transport 4, ce volet 32 évite tout fluage de pâte susceptible de contrarier le bon fonctionnement du dispositif de préformage 1.

Comme visible au niveau de cette figure 3 correspondant à ce second mode de réalisation, au chariot 24 peuvent être associés des moyens de farinage ou d'huilage 38 du tapis 23 destinés à éviter, du moins limiter, l'adhérence de la pâte sur ce dernier.

La présence du rouleau de renvoi 25 situé au-dessus du rouleau de lissage 19 permet d'imprimer à ce tapis 23 un parcours facilitant l'implantation de ces moyens de farinage ou d'huilage 38.

De plus, entre ce rouleau de renvoi 25 et le rouleau de lissage 19, peuvent encore être installés des moyens de raclage 39 pour évacuer la pâte qui viendrait éventuellement adhérer sur ce tapis 23.

Comme il a d'ores et déjà été indiqué plus haut, les avantages découlant de la présente invention consistent en ce qu'au travers du dispositif de préformage selon l'invention, la pâte peut être préformée sous forme d'une bande de pâte parfaitement régulière et surtout de très grande largeur pour, au final, assurer une cadence de production de pâtons plus importante tout en limitant les déchets.

En effet, étant parfaitement régulières, les rognures latérales de la bande de pâte sont minimisées.

Evidemment, en comparaison à une bande de pâte de largeur plus faible, une bande de pâte aux dimensions plus importantes produit nécessairement un nombre de pâtons plus importants.

En particulier, si les dispositifs de préformage existants sont en mesure de produire une bande de pâte de largeur comprise entre 250 et 300 mm, les essais ont démontré qu'un dispositif de préformage selon l'invention était en mesure de délivrer une bande de pâte d'une largeur de l'ordre du mètre, voire davantage.

En conséquence, le dispositif de préformage selon l'invention représente un net progrès dans ce domaine des installations de traitement de pâtes boulangères, pâtissières ou autres.

## Revendications

1. Dispositif de préformage en une bande de pâte boulangère en vue de sa division en pâtons, comportant, sous l'ouverture (3) d'une trémie (2) de stockage de pâte, un couloir (20) pour conformer cette pâte en une bande de pâte (21), comprenant :
- un tapis de transport (4) sensiblement horizontal et soumis à des moyens d'entraînement adaptés ;
pâte s'étendant transversalement, à une distance (d) déterminée au-dessus du tapis de transport (4) et soumis à un déplacement alternatif en amont et en aval sensiblement parallèlement et
dans la direction (D) de déplacement de ce tapis de transport (4),
**caractérisé par le fait qu'**il comporte de part et d'autre de ce tapis (4) et parallèlement à la direction (D) de déplacement de ce dernier, des parois latérales de guidage (14,15) des la pâte (9) et qu'il comporte un bec de repoussage (41) solidarisé en déplacement de ce dernier de manière à s'étendre au moins partiellement sous la trémie (2) et obturer au moins en partie l'ouverture (3) sous cette dernière lorsque ledit rouleau de lissage (19) est repoussé en amont.

2. Dispositif de préformage selon la revendication 1, **caractérisé par le fait que** les parois latérales de guidage (14, 15) sont définies par des bandes de convoyage verticales (16) décrivant un circuit bouclé en venant s'enrouler autour de rouleaux de renvoi verticaux (17, 18) adaptés.

3. Dispositif de préformage selon l'une quelconque des revendications précédentes, **caractérisé par le fait qu'**il comporte des moyens de réglage pour l'ajustement de l'épaisseur (e) de la bande de pâte (21) en sortie du tunnel (20).

4. Dispositif de préformage selon la revendication 3, **caractérisé par le fait qu'**il comporte des moyens de réglage en hauteur du rouleau de lissage (19) et de la trémie (2), par rapport au tapis de transport (4).

5. Dispositif de préformage selon l'une quelconque des revendications précédentes, **caractérisé par le fait que** le rouleau de lissage (19) est solidaire d'un chariot (24) sur lequel agissent des moyens d'entraînement (22) pour le soumettre à un mouvement alternatif.

6. Dispositif de préformage selon la revendication 5, **caractérisé par le fait que** le rouleau de lissage (19) est monté libre en rotation sur ce chariot (24).

7. Dispositif de préformage selon la revendication 5 ou 6, **caractérisé par le fait qu'**autour du rouleau de lissage (19) s'enroule partiellement un tapis (23) décrivant un circuit bouclé en venant s'étendre au moins entre ce rouleau de lissage (19) et un autre rouleau de renvoi (25) placé plus haut que comporte le chariot (24).

8. Dispositif de préformage selon la revendication 7, **caractérisé par le fait que** le tapis (23) du chariot (24) est soumis à des moyens d'entraînement (26) à vitesse de déplacement synchronisée avec celle du tapis de transport (4), indépendamment du déplacement du chariot (24).

9. Dispositif de préformage selon la revendication 8, **caractérisé par le fait que** les moyens d'entraînement (26) sont du type embarqués sur le chariot (24) pour l'entraînement du tapis (23), à ces moyens d'entraînement (26) étant associés des moyens de gestion pour assurer le déplacement à vitesse synchronisée dudit tapis (23) avec celle du tapis de transport (4).

10. Dispositif de préformage selon la revendication 8, **caractérisé par le fait que** les moyens d'entrainement (26) sont définis par le rouleau de renvoi (25) autour duquel vient s'enrouler partiellement le tapis (23) et une courroie d'entrainement (28) à avance motorisée venant s'enrouler partiellement autour dudit rouleau de renvoi (25).

11. Dispositif de préformage selon l'une quelconque des revendications 7 à 10, **caractérisé par le fait qu'**au chariot (24) sont associés des moyens de raclage (39) du tapis (23).

12. Dispositif de préformage selon l'une quelconque des revendications 7 à 10, **caractérisé par le fait qu'**au chariot (24) sont associés des moyens de farinage ou d'huilage (38) du tapis (23).

13. Dispositif de préformage, selon l'une quelconque des revendications précédentes et s'étendant sous l'ouverture (3) d'une trémie (2) de stockage de pâte, ouverture (3) sous forme d'une fente s'étendant sensiblement sous toute la largeur du tapis de transport (4) et délimitée par une paroi amont (10) et
une paroi avale (11) ainsi que des parois de jonction latérales, **caractérisé par le fait qu'**il comporte, dans le prolongement sous la paroi amont (10) de la trémie (2), un poussoir (31) à mouvement oscillant dans la direction (D) de déplacement du tapis de transport (4).

14. Dispositif de préformage selon la revendication 13, **caractérisé par le fait que** le poussoir (31), sous forme d'un volet (32), est monté, articulé, en bordure inférieure (33) de la paroi amont (10) de la trémie (2).

15. Dispositif de préformage selon la revendication 13, **caractérisé par le fait que** le poussoir (31), sous forme d'un volet (32), est de type télescopique.

16. Dispositif de préformage selon la revendication 13, **caractérisé par le fait que** le poussoir (31), sous forme d'un volet (32), est monté articulé sur un coulisseau (34) conçu apte à se déplacer, grâce à des moyens moteurs adaptés, en translation au-dessus du tapis de transport (4), le volet (32) étant rendu solidaire, avec une mobilité relative verticalement et en rotation, de la bordure inférieure (33) de ladite paroi amont (10) de la trémie (2).

## Claims

1. Device for preforming bakery dough into a dough strand for division into dough pieces, including, under the opening (3) of a dough-storage funnel (2), a chute (20) for shaping this dough into a dough strand (21), comprising :
- a substantially horizontal transport belt (4) subjected to adapted driving means;
said device including also a cylinder for smoothing (19) dough extending transversally, at a determined distance (d) above the transport belt (4) and subjected to an alternating upstream and downstream displacement substantially parallel to and in the direction (D) of displacement of this transport belt (4),
wherein it includes, on both sides of this belt (4) and parallel to the direction (D) of displacement of the latter, sidewalls for guiding (14, 15) the dough (9) and it includes a pusher nose (41) juxtaposed immediately upstream of the smoothing cylinder (19) and integral in displacement with the latter, so as to extend at least partially under the funnel (2) and to close at least partially the opening (3) under the latter when said smoothing cylinder (19) is pushed back upstream.

2. Preforming device according to claim 1, wherein the guiding sidewalls (14, 15) are defined by vertical conveying bands (16) describing a loop circuit by winding up around adapted vertical return roller (17, 18).

3. Preforming device according to any of the preceding claims, wherein it includes adjusting means for adjusting the thickness (e) of the dough strand (21) at the exit of the tunnel (20).

4. Preforming device according to claim 3, wherein it includes means for height adjusting the smoothing cylinder (19) and the funnel (2) with respect to the transport belt (4).

5. Preforming device according to any of the preceding claims, wherein the smoothing cylinder (19) is integral with a slide (24), onto which driving means (22) act in order to subject it to an alternating motion.

6. Preforming device according to claim 5, wherein the smoothing cylinder (19) is mounted on this slide (24) so as to freely rotate.

7. Preforming device according to claim 5 or 6, wherein about the smoothing cylinder (19) partially winds up a belt (23) describing a looped circuit extending at least venant between this smoothing cylinder (19) and another return cylinder (25) placed at a higher level, which the slide (24) includes.

8. Preforming device according to claim 1, wherein the belt (23) of the slide (24) is subjected to driving means (26) at a speed of displacement synchronized with that of the transport belt (4), independently from the displacement of the slide (24).

9. Preforming device according to claim 8, wherein the driving means (26) are of the type installed on the slide (24) for driving the belt (23), with these driving means (26) being associated management means for ensuring the displacement at a speed of said belt (23) synchronized with that of the transport belt (4).

10. Preforming device according to claim 8, wherein the driving means (26) are defined by the return cylinder (25) about which partially wind up the belt (23) and a motorized driving belt (28) partially winding up about said return cylinder (25).

11. Preforming device according to any of claims 7 to 10, wherein means for scraping (39) the belt (23) are associated with the slide (24).

12. Preforming device according to any of claims 7 to 10, wherein means for powdering or oiling (38) the belt (23).

13. Preforming device according to any of the preceding claims and extending under the opening (3) of a dough-storage funnel (2), opening (3) in the form of a slit extending substantially under the full width of the transport belt (4) and delimited by an upstream wall (10) and a downstream wall (11) as well as joining sidewalls, wherein it includes, in the extension under the upstream wall (10) of the funnel (2), a pusher (31) with an oscillating motion in the direction (D) of displacement of the transport belt (4).

14. Preforming device according to claim 13, wherein the pusher (31), in the form of a shutter (32), is mounted in a hinged way on the lower edge (33) of the upstream wall (10) of the funnel (2).

15. Preforming device according to claim 13, wherein the pusher (31), in the form of a shutter (32), is of the telescopic type.

16. Preforming device according to claim 13, wherein the pusher (31), in the form of a shutter (32), is mounted in a hinged way on a slide (34) designed capable of moving, thanks to adapted motor means, in translation above the transport belt (4), the shutter (32) being made integral, with a relative mobility vertically and in rotation, with the lower edge (33) of said upstream wall (10) of the funnel (2).

## Patentansprüche

1. Vorrichtung zum Vorformen von Bäckerteig zu einem Teigstrang zur Aufteilung desselben in Teiglinge, umfassend unter der Auslauföffnung (3) eines Teigvorratstrichters (2) einen Durchlass (20), um diesen Teig zu einem Teigstrang (21) zu formen, umfassend:
- ein im wesentlichen waagerechtes und angepassten Antriebsmitteln ausgesetztes Transportband (4);
wobei die besagte Vorrichtung außerdem eine Walze zum Glätten (19) des Teigs umfasst, die sich in einem bestimmten Abstand (d) quer oberhalb des Transportbands (4) erstreckt und abwechselnd einer Vor- und Rückwärtsbewegung im wesentlichen parallel und in die Richtung der Bewegung (D) dieses Transportbandes (4) ausgesetzt ist,
**dadurch gekennzeichnet, dass** sie beiderseits dieses Transportbandes (4) und parallel zu der Richtung der Bewegung (D) dieses letzteren seitliche Wände zur Führung (14, 15) des Teigs (9) umfasst, und dass sie eine Nase zum Zurückdrängen (41) umfasst, die unmittelbar juxtaponiert vor der Glättwalze (19) angeordnet ist und mit dieser letzteren verschiebungsfest verbunden ist, derart, um sich zumindest teilweise unter dem Trichter (2) zu erstrecken und zumindest teilweise die Öffnung (3) unter diesem letzteren abzudichten, wenn die besagte Glättwalze (19) aufwärts zurückgedrängt ist.

2. Vorrichtung zum Vorformen nach Anspruch 1, **dadurch gekennzeichnet, dass** die seitlichen Führungswände (14, 15) durch die senkrechten Beförderungsbänder (16) gebildet sind, die eine Rundschlinge beschreiben, indem sie sich um angepasste senkrechte Umlenkwalzen (17, 18) wickeln.

3. Vorrichtung zum Vorformen nach irgendeinem der vorgehenden Ansprüche, **dadurch gekennzeichnet, dass** sie Einstellmittel für die Justierung der Dicke (e) des Teigstranges (21) am Ausgang des Durchlasses (20) umfasst.

4. Vorrichtung zum Vorformen nach Anspruch 3, **dadurch gekennzeichnet, dass** sie Mittel für die Einstellung der Höhe der Glättwalze (19) und des Trichters (2) hinsichtlich des Transportbands (4) umfasst.

5. Vorrichtung zum Vorformen nach irgendeinem der vorgehenden Ansprüche, **dadurch gekennzeichnet, dass** die Glättwalze (19) mit einem Schlitten (24) fest verbunden ist, auf welchen Antriebsmittel (22) wirken, um ihn abwechselnd einer hin- und hergehenden Bewegung auszusetzen.

6. Vorrichtung zum Vorformen nach Anspruch 5, **dadurch gekennzeichnet, dass** die Glättwalze (19) frei drehbar an diesem Schlitten (24) gelagert ist.

7. Vorrichtung zum Vorformen nach Anspruch 5 oder 6, **dadurch gekennzeichnet, dass** sich um die Glättwalze (19) herum teilweise ein Band (23) aufwickelt, das eine Rundschlinge beschreibt, indem es sich zumindest zwischen dieser Glättwalze (19) und einer anderen, höher angebrachten Umlenkwalze (25), die der Schlitten (24) umfasst, erstreckt.

8. Vorrichtung zum Vorformen nach Anspruch 7, **dadurch gekennzeichnet, dass** das Band (23) des Schlittens (24) Mitteln zum Antrieb (26) mit einer Vorschubgeschwindigkeit ausgesetzt ist, die mit jener des Transportbandes (4), unabhängig von der Bewegung des Schlittens (24), synchronisiert ist.

9. Vorrichtung zum Vorformen nach Anspruch 8, **dadurch gekennzeichnet, dass** die Antriebsmittel (26) vom Typ auf dem Schlitten (24) für den Antrieb des Bandes (23) eingebettet sind, wobei diesen Antriebsmitteln (26) Steuerungsmittel zugeordnet sind, um die Bewegung des besagten Bandes (23) mit einer Geschwindigkeit zu sichern, die mit jener des Transportbands (4) synchronisiert ist.

10. Vorrichtung zum Vorformen nach Anspruch 8, **dadurch gekennzeichnet, dass** die Antriebsmittel (26) durch die Umlenkwalze (25) gebildet sind, um welche sich teilweise das Band (23) wickelt, und ein Antriebsriemen (28) mit motorischem Vorschub wickelt sich teilweise um die besagte Umlenkwalze (25).

11. Vorrichtung zum Vorformen nach irgendeinem der Ansprüche 7 bis 10, **dadurch gekennzeichnet, dass** dem Schlitten (24) Mittel zum Abstreifen (39) des Bandes (23) zugeordnet sind.

12. Vorrichtung zum Vorformen nach irgendeinem der Ansprüche 7 bis 11, **dadurch gekennzeichnet, dass** dem Schlitten (24) Mittel zum Bemehlen oder Einfetten (38) des Bandes (23) zugeordnet sind.

13. Vorrichtung zum Vorformen nach irgendeinem der vorgehenden Ansprüche, die sich unter der Auslauföffnung (3) eines Teigvorratstrichters (2) erstreckt, wobei die Öffnung (3) die Form von einem Spalt aufweist, der sich im wesentlichen auf der ganzen Breite des Transportbands (4) erstreckt und durch eine Stirnwand (10) und eine Rückwand (11) sowie durch seitliche Verbindungswände abgegrenzt ist, **dadurch gekennzeichnet, dass** sie in der Verlängerung auf der Stirnwand (10) des Trichters (2) einen Schieber (31) mit einer in Richtung der Bewegung (D) des Transportbands (4) oszillierenden Bewegung umfasst.

14. Vorrichtung zum Vorformen nach Anspruch 13, **dadurch gekennzeichnet, dass** der Schieber (31) in Form von einer Klappe (32) schwenkbar in der unteren Einfassung (33) der Stirnwand (10) des Trichters (2) montiert ist.

15. Vorrichtung zum Vorformen nach Anspruch 13, **dadurch gekennzeichnet, dass** der Schieber (31) in Form von einer Klappe (32) ausziehbarer Art ist.

16. Vorrichtung zum Vorformen nach Anspruch 13, **dadurch gekennzeichnet, dass** der Schieber (31) in Form von einer Klappe (32) schwenkbar an einem Schlitten (34) montiert ist, der geeignet vorgesehen ist, um dank angepassten motorischen Mitteln sich translatorisch oberhalb des Transportbandes (4) zu verschieben, wobei die Klappe (32) mit einer relativen Beweglichkeit senkrecht und in Drehung mit der unteren Einfassung (33) der besagten Stirnwand (10) des Trichters (2) fest verbunden ist.
